# DEMANDE DE BREVET EUROPEEN

(11) **EP 0 552 080 A2**
(43) Date de publication de la demande: **21.07.1993**
(21) Numéro de dépôt: 93400043.1
(22) Date de dépôt: 11.01.1993
(51) Int. Cl.: H04B 10/10, G02B 6/42, G02B 6/28

(54) **Récepteur interne d'émissions infrarouges pour véhicule automobile**

(30) Priorité: 15.01.1992 FR 9200359
(71) Demandeur: VALEO SECURITE HABITACLE, 78290 Croissy-Sur-Seine (FR)
(72) Inventeur: Jawdoszyn, Claude, F-95110 Sannois (FR); Dubail, Jean-Christophe, F-92400 Courbevoie (FR)
(74) Mandataire: Gamonal, Didier

(57) **Abrégé**

Récepteur interne d'émissions lumineuses codées, plus particulièrement infrarouges, pour véhicule automobile, comprenant un dispositif électronique récepteur (14) équipé d'une diode réceptrice (16), au moins un dispositif optique récepteur (12,12') multidirectionnel, des moyens de transmission des émissions lumineuses codées entre le dispositif optique récepteur (12,12') et la diode réceptrice (16), les moyens de transmission comprennent au moins une fibre optique (18) dont l'une des extrémités est solidaire du dispositif optique récepteur (12,12') et dont l'autre extrémité est solidaire d'un dispositif mélangeur (20) disposé au-dessus de la diode réceptrice (16).

## Description

La présente invention concerne un récepteur interne d'émissions lumineuses codées pour véhicule automobile, lesdites émissions lumineuses codées étant produites dans le domaine visible ou l'infrarouge par des émetteurs indépendants du véhicule automobile.

L'utilisation de rayonnements lumineux codés, en particulier dans l'infrarouge, a reçu de nombreux développements dans l'industrie automobile.

On connaît par exemple un dispositif de détection infrarouge permettant la commande à distance d'ouverture des portes d'un véhicule automobile, qui utilise un émetteur infrarouge et un récepteur associé situé à l'intérieur du véhicule.

En général, un récepteur de ce type est un ensemble compact contenu dans un boîtier comportant les éléments optiques de réception, la ou les diodes réceptrices et le circuit imprimé sur lequel sont implantés les différents composants électroniques constituant notamment le circuit de décodage des informations transmises par l'émetteur.

Les exigences à satisfaire pour un bon fonctionnement du récepteur sont respectées par le concepteur global du produit ceci d'autant plus facilement qu'il est maître de la constitution du boîtier contenant ledit récepteur.

Il n'en est pas de même quand le récepteur doit être implanté à l'intérieur du véhicule dans un organe choisi et conçu par le constructeur dudit véhicule.

En effet, dans un tel concept, les zones de réception des émissions lumineuses codées transmises par l'émetteur se trouvent le plus souvent éloignées des circuits électroniques de traitement desdites émissions.

De plus, le fonctionnement d'un tel système est très directif ce qui oblige à multiplier les zones de réception de manière à obtenir un fonctionnement convenable en un maximum de positions autour du véhicule.

Pour remplir ces conditions, il devient nécessaire, d'une part, de multiplier les diodes réceptrices et, d'autre part, de préamplifier le signal transmis par lesdites diodes. Cette préamplification est indispensable car le signal à la sortie des diodes est très faible : quelques microampères et sa transmission sur des distances même très courtes, comme par exemple quelques centimètres, entraîne des bruits parasites qui empêchent un fonctionnement correct de l'ensemble du système.

La multiplicité des diodes réceptrices et les circuits de préamplification du signal qui doivent être implantés près desdites diodes compliquent la conception de l'ensemble du récepteur et conduisent à une augmentation de coût incompatible pour une production en grande série comme c'est le cas dans le domaine automobile.

La présente invention résoud ces problèmes et propose à cet effet un récepteur interne d'émissions lumineuses codées, plus particulièrement infrarouges, pour véhicule automobile, comprenant un dispositif électronique récepteur équipé d'une diode réceptrice, au moins un dispositif optique récepteur multidirectionnel, des moyens de transmission des émissions lumineuses codées entre le dispositif optique récepteur et la diode réceptrice, caractérisé en ce que les moyens de transmission comprennent au moins une fibre optique dont l'une des extrémités est solidaire du dispositif optique récepteur et dont l'autre extrémité est solidaire d'un dispositif mélangeur disposé au-dessus de la diode réceptrice.

Selon d'autes caractéristiques de l'invention :
- chaque dispositif optique récepteur est réalisé de manière monobloc et comprend une barrette à l'avant de laquelle sont ménagés deux capteurs présentant des inclinaisons opposées par rapport à la barrette,
- chaque capteur présente une extrémité semi-sphérique se raccordant à une portion cylindrique comprenant en leur centre un trou borgne respectivement destiné à recevoir l'une des extrémités de chaque fibre optique,
- le dispositif mélangeur comprend, solidaire du dispositif électronique récepteur, un support mélangeur associé à un prisme mélangeur,
- le support mélangeur présente une paroi supérieure raccordée à quatre parois verticales comprenant chacune un trou destiné au passage de chaque fibre optique, l'axe des trous étant confondu pour les axes-médiatrices Y-Y et X-X desdites parois
- le support mélangeur comporte un prisme saillant situé au point de convergence des axesmédiatrices X-X et Y-Y
- le prisme mélangeur comporte quatre fûts cylindriques présentant des faces saillantes planes destinées à recevoir chacune l'une des extrémités de chaque fibre optique et des faces biseautées constituant entre elles un prisme creux de forme complémentaire au prisme du support mélangeur,
- le support mélangeur comprend des moyens de fixation du prisme mélangeur constitués de quatre pattes ménagées aux quatre coins du prisme saillant,
- chacune des pattes présente à son extrémité une protubérance placée symétriquement par rapport à l'axe médiatrice X-X de manière à former entre les pattes deux berceaux circulaires ouverts
- deux des fûts cylindriques du prisme mélangeur coopèrent par encliquetage avec les berceaux circulaires ouverts.

L'invention sera mieux comprise avec la description qui va suivre en regard des dessins annexés dans lesquels :
- la figure 1 est une vue schématique montrant l'agencement d'un récepteur suivant l'invention ;
- la figure 2 est une vue de détail à plus grande échelle d'un dispositif optique récepteur ;
- la figure 3 est une vue du dispositif optique suivant la flèche de la figure 2 ;
- la figure 4 est une vue en coupe suivant la ligne A-A de la figure 2 ;
- la figure 5 est une vue en perspective d'un support du dispositif mélangeur ;
- la figure 6 est une vue de dessus du support ;
- la figure 7 est une vue en coupe suivant la ligne Y-Y de la figure 6 ;
- la figure 8 est une vue partielle en coupe à plus grande échelle suivant la ligne B-B de la figure 6 ;
- la figure 9 est une vue en perspective d'un prisme du dispositif mélangeur ;
- la figure 10 est une vue de dessous du prisme ;
- la figure 11 est une vue de dessus dudit prisme.

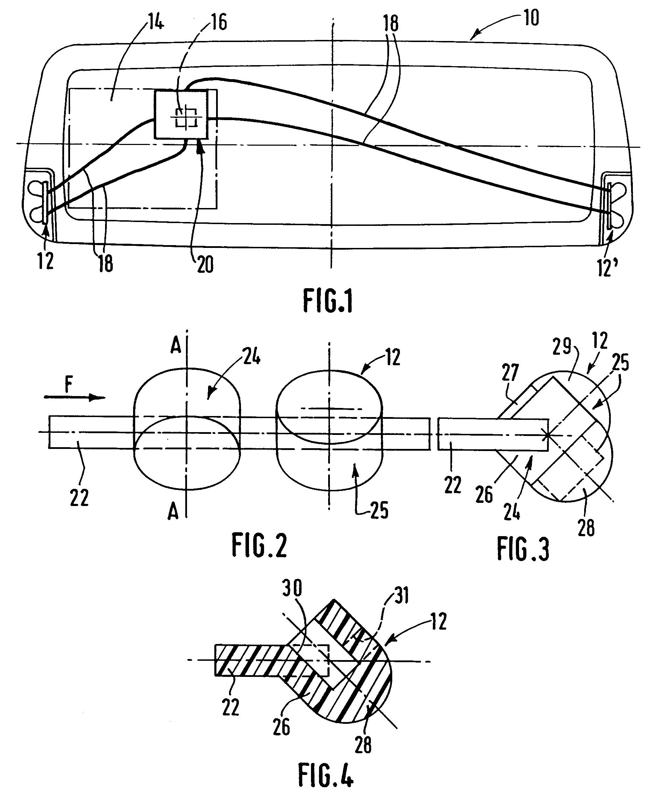

On se réfère tout d'abord à figure 1 qui illustre schématiquement un ensemble récepteur interne d'émissions codées lumineuses.

Ce récepteur est implanté dans un organe interne du véhicule et, dans l'exemple représenté, cet organe interne est un rétroviseur 10 communément fixé sur le pare-brise du véhicule.

Ce rétroviseur 10 constitue le boîtier renfermant les différents éléments du récepteur.

De manière à recevoir facilement les émissions lumineuses codées venant d'un émetteur extérieur au véhicule, le rétroviseur 10 comporte à chacun de ses angles inférieurs gauche et droit un dispositif optique de réception 12,12' multidirectionnel qui sera décrit en détail plus avant.

A l'intérieur du rétroviseur 10 est fixé un circuit imprimé 14 sur lequel sont implantés, d'une part, une diode réceptrice unique 16 et, d'autre part, les différents composants électroniques permettant un traitement approprié des émissions lumineuses codées consistant notamment à effectuer une comparaison des codes entre l'émetteur et le récepteur et, en cas de concordance desdits codes, d'émettre un signal autorisant la commande des ouvrants du véhicule. Un tel traitement ne faisant pas partie de la présente invention ne sera pas décrit plus en détail. Le circuit imprimé 14 et ses composants forment le dispositif électronique récepteur.

Le récepteur comprend des moyens permettant de façon économique et sûre d'acheminer les émissions lumineuses codées entre les dispositifs optiques de réception 12,12' et la diode réceptrice 16.

Ces moyens sont constitués de fibres optiques 18, dont l'une des extrémités est solidaire des dispositifs optiques de réception 12,12' et dont l'autre extrémité est solidaire d'un dispositif mélangeur 20 disposé au-dessus de la diode réceptrice 16.

Ce dispositif mélangeur 20 sera également décrit en détail plus avant.

On se réfère maintenant aux figures 2 à 4 qui illustrent les dispositifs optiques de réception 12,12'. Chacun des récepteurs étant identique, on considérera que lesdites figures représentent le dispositif optique 12.

Ce dispositif est réalisé de manière monobloc par moulage d'une matière plastique présentant de très bonnes qualités optiques telles que du polyméthacrylate.

Le dispositif est constitué d'une barrette horizontale 22, de forme générale parallélépipèdique à l'avant de laquelle sont ménagées de matière deux capteurs 24,25. Au niveau de leur rattachement avec la barrette 22, chaque capteur présente une portion cylindrique 26,27 se raccordant à une extrémité demi-sphérique 28,29.

Les portions cylindriques 26,27 comprennent en leur centre un trou borgne 30,31 destiné à recevoir l'une extrémités des fibres optiques 18.

De manière à rendre le dispositif récepteur multidirectionnel, chaque capteur 24,25 est incliné. Dans l'exemple représenté le capteur 24 est incliné de 45° vers le bas et est plus particulièrement destiné à la réception des émissions émises à travers les vitres latérales du véhicule tandis que le capteur 25 est incliné de 45° vers le haut et est plus particulièrement destiné à recevoir les émissions émises à travers le pare-brise du véhicule.

Chacun des capteurs 24,25 présente donc, par rapport à la barret horizontale 22, une inclinaison opposée.

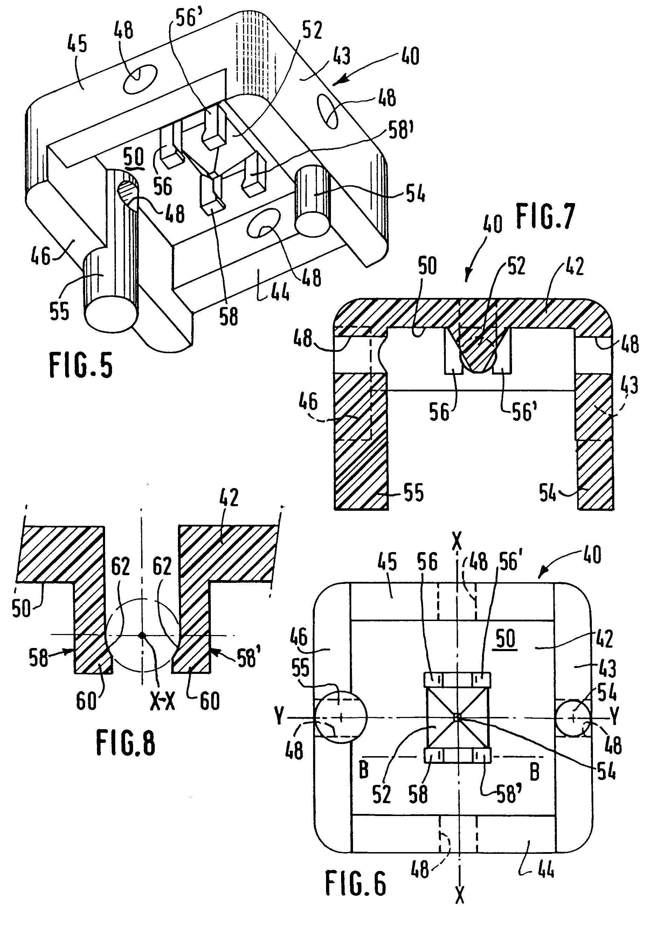

On se réfère maintenant aux figures 5 et 8 qui illustrent une première pièce constitutive du mélangeur 20 dénommée ci-après support de mélangeur 40.

Ce support 40 est réalisé de manière monobloc par moulage d'une matière thermoplastique et présente une paroi Supérieure 42 horizontale raccordée à quatre parois verticales 43,44,45 et 46.

Sur la face inférieure 50 de la paroi supérieure 42 est ménagé en son centre un prisme saillant 52 ainsi qu'on peut le voir en particulier figure 6. Le sommet 54 du prisme 52 se situe au point de convergence des axes des médiatrices X-X et Y-Y des parois verticales 43 à 46.

Lesdites parois 43 à 46 comprennent, suivant les axes X-X et Y-Y un trou traversant 48 destiné au passage des fibres optiques 18. Autrement dit, chaque trou 48 se trouve en vis-à-vis d'une des faces inclinées du prisme 52.

Les parois 43 à 46 sont prolongées chacune par un plot cylindrique respectivement 54,55 dont les extrémités sont destinées à coopérer avec des trous prévus dans le circuit imprimé 14. La différence de diamètre des plots 54,55 constitue un système d'indexation pour l'implantation de l'ensemble du dispositif mélangeur 20 sur le circuit imprimé 14.

A partir de la face inférieure 50, aux quatre coins du prisme 52 sont agencées quatre pattes 56,56' et 58,58' dont le rôle sera explicité ci-après.

Comme on peut le voir en particulier sur la figure 8, chacune des pattes 56,56' ; 58,58' présente à son extrémité une protubérance 60 se raccordant sur les faces desdites pattes par une portion circulaire 62.

Cette protubérance 60 est disposée symétriquement de part et d'autre de l'axe X-X de manière à constituer entre deux pattes 56,56' ou 58,58' un berceau circulaire ouvert 62.

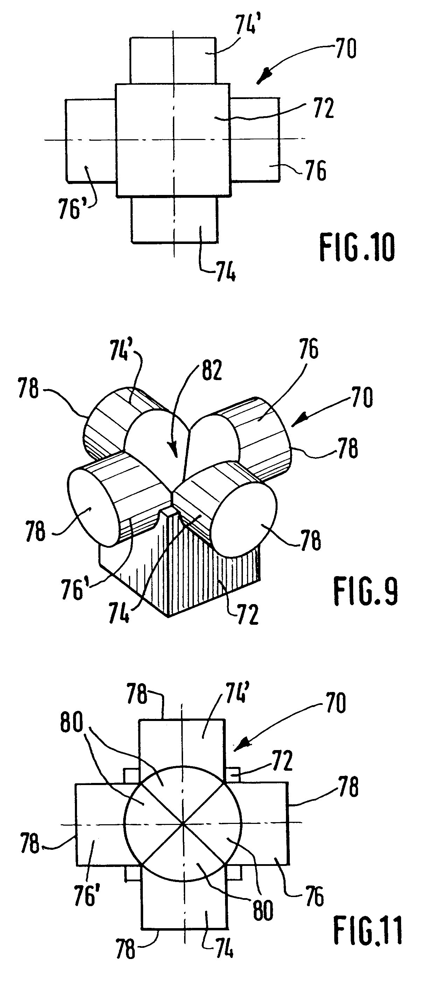

On se réfère maintenant aux figures 9 à 11 qui illustrent une deuxième pièce constitutive du mélangeur 20 dénommée ci-après prisme de mélangeur 70.

Ce prisme est réalisé de manière monobloc par moulage d'une matière plastique présentant de très bonnes qualités optiques telles que du polyméthacrylate.

Ce prisme se présente sous la forme générale d'un cube 72 présentant sur chacune de ses quatre faces verticales quatre fûts cylindriques identiques 74,74' ; 76,76' orthogonaux deux à deux, dont l'extrémité saillante est une face plane 78 destinée à recevoir l'une des extrémités des fibres optiques 18.

Les faces 80 des fûts cylindriques 74,74' ; 76,76' opposées aux faces 78 sont biseautées de manière à former entre elles un prisme creux 82 de forme complémentaire au primse 52 du support du mélangeur 40.

Les extrémités des fibres optiques 18 étant passées à travers les trous 48 du support 40 et raccordées aux faces planes 78 du prisme 70, il suffit alors de rendre solidaire ledit prisme 70 dudit support 40.

Cette solidarisation s'effectue par coopération des fûts cylindriques 74,74' ou 76,76' avec les pattes 56,56' et 58,58' du support 50. Par exemple le fût 74 va écarter les pattes 58,58' et venir se loger par encliquetage dans leur berceau circulaire 62 ; de même le fût 74' va coopérer de la même manière avec le berceau circulaire 62 formé par les pattes 56,56'.

L'ensemble du dispositif mélangeur 20 étant ainsi constitué il suffit d'introduire les plots 54 et 55 dans les trous correspondants prévus à cet effet dans le circuit imprimé et d'effectuer par exemple une soudure par ultra-sons pour assurer leur solidarisation.

L'implantation du dispositif mélangeur 20 sur le circuit imprimé 14 est agencé de manière à ce que le sommet 54 du prisme 52 du support 40 soit juste au-dessus de la zone à sensibilité maximum de la diode réceptrice 16.

## Revendications

1. Récepteur interne d'émissions lumineuses codées, plus particulièrement infrarouges, pour véhicule automobile, comprenant un dispositif électronique récepteur (14) équipé d'une diode réceptrice (16), au moins un dispositif optique récepteur (12,12') multidirectionnel, des moyens de transmission des émissions lumineuses codées entre le dispositif optique récepteur (12,12') et la diode réceptrice (16), caractérisé en ce que les moyens de transmission comprennent au moins une fibre optique (18) dont l'une des extrémités est solidaire du dispositif optique récepteur (12,12') et dont l'autre extrémité est solidaire d'un dispositif mélangeur (20) disposé au-dessus de la diode réceptrice (16).

2. Récepteur selon la revendication 1, caractérisé en ce que chaque dispositif optique récepteur (12,12') est réalisé de manière monobloc et comprend une barrette (22) à l'avant de laquelle sont ménagés deux capteurs (24,25) présentant des inclinaisons opposées par rapport à la barrette (22).

3. Récepteur selon la revendication 2, caractérisé en ce que chaque capteur (24,25) présente une extrémité semi-sphérique respectivement (28,29) se raccordant à une portion cylindrique respectivement (26,27) comprenant en leur centre un trou borgne respectivement (30,31) destiné à recevoir l'une des extrémités de chaque fibre optique (18).

4. Récepteur selon la revendication 1, caractérisé en ce que le dispositif mélangeur (20) comprend, solidaire du dispositif électronique récepteur (14), un support mélangeur (40) associé à un prisme mélangeur (70).

5. Récepteur selon la revendication 4, caractérisé en ce que le support mélangeur (40) présente une paroi supérieure (42) raccordée à quatre parois verticales (43,44,45,46) comprenant chacune un trou (48) destiné au passage de chaque fibre optique (18), l'axe des trous (48) étant confondu pour les parois (43,46) avec leur axe-médiatrice Y-Y et pour les parois (44,45) avec leur axe-médiatrice X-X.

6. Récepteur selon la revendication 5, caractérisé en ce que le support mélangeur (40) comporte un prisme saillant (52) situé au point de convergence des axes-médiatrices X-X et Y-Y.

7. Récepteur selon la revendication 4, caractérisé en ce que le prisme mélangeur (70) comporte quatre fûts cylindriques (74,74' ; 76,76') présentant des faces saillantes planes (78) destinées à recevoir chacune l'une des extrémités de chaque fibre optique (18) et des faces biseautées (80) constituant entre elles un prisme creux (82) de forme complémentaire au prisme (52) du support mélangeur (40).

8. Récepteur selon l'une des revendications 4 à 7, caractérisé en ce que le support mélangeur (40) comprend des moyens de fixation du prisme mélangeur (70) constitués de quatre pattes (56,56' ; 58,58') ménagées aux quatre coins du prisme saillant (52).

9. Récepteur selon la revendication 8, caractérisé en ce que chacune des pattes (56,56' ; 58,58') présente à son extrémité une protubérance (60) placée symétriquement par rapport à l'axe médiatrice X-X de manière à former entre les pattes (56,56' ; 58,58') deux berceaux circulaires ouverts (62).

10. Récepteur selon l'une des revendications 4 à 9, caractérisé deux des fûts cylindriques (74,74 ; 76,76') du prisme mélangeur (70) coopèrent par encliquetage avec les berceaux circulaires ouverts (62).
